# EUROPÄISCHE PATENTSCHRIFT

(11) **EP 1 224 086 B1**
(45) Veröffentlichungstag und Bekanntmachung des Hinweises auf die Patenterteilung: **02.01.2004**
(21) Anmeldenummer: 00972779.3
(22) Anmeldetag: 16.10.2000
(51) Int. Cl.: B60C 23/04

(54) **VERFAHREN UND SYSTEM ZUM IDENTIFIZIEREN EINES REIFENS EINES FAHRZEUGS**
METHOD AND SYSTEM FOR IDENTIFYING A TYRE OF A VEHICLE
PROCEDE ET SYSTEME POUR IDENTIFIER UN PNEU DE VEHICULE

(30) Priorität: 25.10.1999 DE 19951273
(43) Veröffentlichungstag der Anmeldung: 24.07.2002
(73) Patentinhaber: Lucas Varity GmbH, 56070 Koblenz (DE)
(72) Erfinder: SCHMITT, Hubert, 56299 Ochtendung (DE)
(74) Vertreter: Schmidt, Steffen J., Dipl.-Ing.
(86) Internationale Anmeldenummer: PCT/EP2000/010180
(87) Internationale Veröffentlichungsnummer: WO 2001/030594

(56) Entgegenhaltungen:
- EP-A- 0 466 535
- EP-A- 0 712 740
- DE-A- 19 632 150

## Beschreibung

### Hintergrund der Erfindung

Die Erfindung betrifft ein Verfahren und ein System zum Identifizieren eines Reifens eines Fahrzeugs unter Verwendung der Reifendrücke der zu identifizierenden Reifen.

### Stand der Technik

Bekannt Systeme zur Überwachung von Reifendrücken unterschiedlicher Reifen eines Fahrzeugs umfassen Drucksensorelemente, die normalerweise auf den Felgen angebracht sind und von den entsprechenden Reifen umschlossen werden, auf Innenseiten der Reifen angebracht sind, oder in die Reifen oder das Ventil integriert sind. Die Drucksensorelemente sind jeweils mit einem Sender verbunden, die Signale/Daten, die die erfaßten Reifendrücke angeben, sowie eine für die entsprechenden Drucksensorelemente charakteristische Kennungen (ID-Informationen) an ein Empfangsgerät übertragen. Das Empfangsgerät wertet die die Reifendrücke angebenden Signale/Daten sowie die charakteristischen Kennungen aus.

Da das Empfangsgerät keine Informationen erhält oder empfängt, welche charakteristische Kennung und welche Reifendrucksignale zu welchem Reifen gehören, ist es erforderlich, das Reifendruckkontrollsystem so zu kalibrieren, daß der Empfänger die Zuordnung der von den Sendern erhaltenen Informationen zu den entsprechenden Drucksensorelementen vornehmen kann.

Erst auf der Grundlage dieser Zuordnungen kann der Empfänger und/oder eine damit verbundene Steuer-/Kontrolleinheit Informationen darüber bereitstellen, bei welchem Reifen welcher Reifendruck vorliegt und einen etwaigen Druckabfall dem entsprechenden Reifen zuzuordnen. Auch bei einem Versagen oder einer Fehlfunktion eines Drucksensorelements kann so das defekte Drucksensorelement identifiziert werden.

Dieser Kalibriervorgang (der auch als Lernmodus bezeichnet wird) ist sowohl bei der ersten Rad- bzw. Reifenmontage an einem fabrikneuen Fahrzeug sowie bei jedem späteren Rad- bzw. Reifen- oder Ventilwechsel durchzuführen, da nicht gewährleistet werden kann, daß die Räder bzw. die Reifen nach ihrem Wechsel entsprechend der vorherigen Zuordnung angebracht werden.

Der Kalibriervorgang wird normalerweise mit Hilfe von Transpondern durchgeführt, die in entsprechenden Sensorschaltungen der Sensorelemente integriert sind. In einer festgelegten Reihenfolge wird jeder der Transponder einzeln zum Übertragen von Daten angeregt, so daß eine eindeutige Zuordnung der charakteristischen Kennungen sowie der übertragenen Druckinformationen zu den entsprechenden Drucksensorelementen vorgenommen werden kann. Bei einem Personenkraftwagen mit vier Rädern und einem Ersatzrad, die jeweils einen Reifen aufweisen, kann die Reihenfolge zum Anregen der einzelnen Transponder der Reifen wie folgt festgelegt werden:
Vorderreifen links - Vorderreifen rechts - Hinterreifen links - Hinterreifen rechts - Ersatzreifen.

Diese Vorgehensweise zum Identifizieren einzelner Reifen eines Fahrzeugs sowie zum Zuordnen von Sensorinformationen, die an entsprechenden Reifen erfaßt und zu einem Empfänger übertragen werden, zu den entsprechenden Reifen hat verschiedene Nachteile. Die Rekalibrierung derartiger Reifendruckkontrollsysteme ist zeitaufwendig und erfordert zusätzliche Vorrichtungen zum Anregen der den einzelnen Drucksensorelementen zugeordneten Transponder. Diese Vorrichtungen zum Anregen der Transponder stehen im allgemeinen nur den verschiedenen Fahrzeugfachbetrieben zur Verfügung, weshalb ein Reifenwechsel ohne Inanspruchnahme eines Fahrzeugfachbetriebes, d.h. von dem Fahrer/Halter selbst durchgeführter Reifenwechsel, nicht durchgeführt werden sollte, um die fehlerfreie Funktion des Reifendruckkontrollsystems zu gewährleisten. Wird ein Reifenwechsel dennoch ohne Inanspruchnahme eines Fahrzeugfachbetriebes, d.h. privat durchgeführt oder wird bei einem Reifenwechsel kein Kalibriervorgang durchgeführt, ist eine fehlerfreie Funktion des Reifendruckkontrollsystems nicht mehr sichergestellt. Des weiteren kann es zu Fehlfunktionen des Reifendruckkontrollsystems kommen, wenn beispielsweise die aktuelle Zuordnung dem Reifendruckkontrollsystem nicht mehr bereitgestellt werden kann. Dies kann z.B. auftreten, wenn ein Speicher, in dem die aktuelle Zuordnung gespeichert ist, zufällig/unerwünscht gelöscht wird. In solchen Fällen wird bei derartigen Reifendruckkontrollsystemen eine Wiederholung des Kalibriervorgangs erforderlich, wozu normalerweise das Fahrzeug in einen entsprechenden Fachbetrieb gebracht werden muß. Jedenfalls ist der Betrieb des Fahrzeugs zu unterbrechen, da die erneute Kalibrierung des Reifendruckkontrollsystems von demselben nicht selbständig/automatisch und/oder während des Fahrbetriebs des Fahrzeugs durchgeführt werden kann.

Aus der dem Gegenstand des Oberbegriffs des Anspruchs 10 entsprechenden DE 196 32 150 A1 ist ein Verfahren zur Kontrolle des Luftdrucks in den Reifen von Kraftfahrzeugrädern bekannt, bei dem zur Identifizierung der einzelnen Reifen Langwelleneinheiten verwendet werden, die jeweils einem Reifen zugeordnet sind und Langwellensignale übertragen. Die Langwellensignale werden jeweils von einer Langwellenempfangseinheit eines einem Reifen zugeordneten Radmoduls empfangen und zur Generierung eines Langwellenidentifikationssignales aufbereitet. Jedes der Radmodule überträgt das entsprechende Langwellenidentifikationssignal zusammen mit einem Datensignal, das den jeweiligen Reifendruck angibt, zu einer an dem Fahrzeug angeordneten Empfangseinheit. Anhand der in den Datensignalen enthaltenen Langwellenidentifikationssignale kann dann eine eindeutige Zuordnung der Positionen der Kraftfahrzeugräder zu den von den Radmodulen übertragenen Datensignalen erfolgen. Nachteilig ist hierbei, daß zusätzlich zu den Komponenten zur Erfassung der Reifendrücke an den Reifen oder Rädern und dem Fahrzeug anzuordnende Komponenten erforderlich sind, um die Langwellensignale zu übertragen sowie die Langwellenidentifikationssignale zu erzeugen, in die Datensignale einzubetten und aus den Datensignalen nach ihrer Übertragung wieder zu erhalten.

Gemäß EP 0 466 535 A1 (nächstkommender Stand der Technik bezüglich Auspruch 1) und EP 0 712 740 A2 wird ein Reifen eines Fahrzeugs anhand eines an diesem auftretenden Reifendruckverlusts identifiziert.

### Aufgabe der Erfindung

Davon ausgehend soll die Erfindung ein Verfahren und ein System bereitstellen, das ohne zeitaufwendigen und kostenintensiven Rekalibriervorgang eine eindeutige Identifikation von Reifen eines Fahrzeugs sowie von an den Reifen erfaßten Sensorsignalen zu den entsprechenden Reifen ermöglicht. Des weiteren soll die Erfindung eine Lösung bereitstellen, die die Verwendung von zusätzlichen, für den Kalibriervorgang erforderlichen Einrichtungen (z.B. Transponder, Langwellen-Übertragungseinheiten) vermeidet. Außerdem sollen Fehlfunktionen eines Reifendruckkontrollsystems reduziert und auf einfache Weise korrigiert werden.

### Kurzbeschreibung der Erfindung

Zur Lösung stellt die Erfindung ein Verfahren gemäß Anspruch 1 und ein System gemäß Anspruch 10 bereit.

Bei dem erfindungsgemäßen Verfahren zum Identifizieren eines Reifens eines Fahrzeugs wird ein Reifendruck eines Fahrzeugreifens bei wenigstens zwei unterschiedlichen fahrdynamischen Zuständen des Fahrzeugs erfaßt und die erfaßten Reifendrücke werden verglichen, um auf der Grundlage dieses Vergleichs eine Reifendruckänderung zu ermitteln. Die ermittelte Reifendruckänderung wird unter Verwendung von Fahrzustandsparametern analysiert, die von den wenigstens zwei unterschiedlichen fahrdynamischen Zuständen bestimmt werden. Basierend auf der Analyse der Reifendruckänderung wird der Reifen des Fahrzeugs identifiziert, an dem die Reifendrücke erfaßt wurden.

Diese Vorgehensweise beruht auf dem Umstand, daß sich die dynamischen Reifenumfänge in Abhängigkeit des jeweiligen vorliegenden fahrdynamischen Zustands des Fahrzeugs ändern. Diese Änderung der dynamischen Reifenumfänge bewirkt eine Reifendruckänderung in dem entsprechenden Reifen. Werden die Reifendrücke eines Reifens bzw. deren Änderungen ermittelt und stehen Informationen zur Verfügung, die eine Beschreibung/Definition des die Reifendruckänderungen verursachenden fahrdynamischen Zustands des Fahrzeugs ermöglichen, kann der Reifen des Fahrzeugs eindeutig identifiziert werden, an dem die Reifendrücke erfaßt wurden.

Ergänzend kann das Erfassen und Vergleichen der Reifendrücke für wenigstens einen Reifen von wenigstens zwei unterschiedlichen Rädern des Fahrzeugs durchgeführt werden. Auf diese Weise können mehrere, vorzugsweise alle Reifen des Fahrzeugs identifiziert werden. Ferner können so mehrere Reifen identifiziert werden, die einem Rad des Fahrzeugs zugeordnet sind. Dies ist beispielsweise bei Lastkraftwagen mit Zwillingsreifen der Fall.

Ergänzend können die Reifendrücke aller Reifen erfaßt und miteinander verglichen werden, an denen Reifendrücke ermittelt werden. Das Analysieren der Reifendrücke kann dann unter Verwendung von Informationen durchgeführt werden, die zuvor erfaßte Reifendrücke oder Reifendruckänderungen, Nachschlagetabellen und Informationen umfassen, die zur Anwendung neuronaler Netzwerke oder chaostheoretischer Verfahren dienen. Auf diese Weise kann das Identifizieren der einzelnen Reifen des Fahrzeugs schneller und exakter durchgeführt werden, da zum Analysieren der wenigstens einen Reifendruckänderung nicht nur Fahrzustandsparameter verwendet werden, sondern auch Informationen, die sich aus dem Vergleich der Reifendrücke aller Räder ergeben. Diese zusätzlichen Informationen erlauben eine genauere Beschreibung des fahrdynamischen Zustands des Fahrzeugs in dem die Reifendrücke ermittelt werden. Ferner wird die Anzahl unterschiedlicher fahrdynamischer Zustände des Fahrzeugs reduziert, in denen Reifendrücke der Reifen erfaßt werden müssen, um einzelne Reifen des Fahrzeugs eindeutig zu identifizieren.

Um das erfindungsgemäße Verfahren zu vereinfachen, kann das Erfassen der Reifendrücke wenigstens ein Erfassen der Reifendrücke bei einem vorbestimmten fahrdynamischen Zustand des Fahrzeugs umfassen. Hierbei wird vorzugsweise für einen, mehrere oder alle Reifen des Fahrzeugs ein Reifendruck in einem vordefinierten fahrdynamischen Zustand des Fahrzeugs erfaßt. Ein solcher vorbestimmter/vordefinierter fahrdynamischer Zustand des Fahrzeugs kann beispielsweise eine Geradeausfahrt des Fahrzeugs mit konstanter Geschwindigkeit oder einer vorgegebenen konstanten Beschleunigung sein. Ferner ist es hier auch möglich, Reifendrücke von Reifen zu erfassen, wenn das Fahrzeug betrieben, aber nicht bewegt wird (z.B. wenn sich das Fahrzeug in einer Parkposition befindet und die Zündung eingeschaltet oder der Motor gestartet ist).

Ergänzend kann das Verfahren auch ein Erfassen von Fahrzustandsparametern umfassen, die von fahrdynamischen Zuständen des Fahrzeugs bestimmt werden. Auf diese Weise ist es nicht mehr erforderlich, daß die benötigten Fahrzustandsparameter von anderen Komponenten des Fahrzeugs bereitgestellt werden, die entsprechende Verfahren zum Erfassen von Fahrzustandsparametern ausführen. Außerdem kann so das Erfassen von Fahrzustandsparametern optimiert werden, indem das Erfassen der Fahrzustandsparameter speziell auf das Verfahren zum Identifizieren von Reifen abgestimmt wird.

Vorzugsweise werden fahrdynamische Zustände des Fahrzeugs aus den entsprechenden Fahrzustandsparametern ermittelt. Dies erlaubt es, daß beim Analysieren der Reifendruckänderungen nicht einzelne Fahrzustandsparameter verwendet werden müssen, sondern Informationen, die fahrdynamische Zustände des Fahrzeugs umfassend wiedergeben. Zum Ermitteln der fahrdynamischen Zustände des Fahrzeugs aus den entsprechenden Fahrzustandsparametern können bekannte Algorithmen, Nachschlagetabellen, Berechnungsverfahren, die auf neuronalen Netzen oder einer Fuzzy-Logik, und Daten/Informationen verwendet werden, die unter Verwendung anderer Verfahren zum Ermitteln von fahrdynamischen Zuständen des Fahrzeugs bereitgestellt werden, die von speziell hierfür ausgelegten Fahrzeugkomponenten durchgeführt werden.

Des weiteren können Daten gespeichert werden, die zum Identifizieren einzelner oder aller Reifen des Fahrzeugs dienen. Diese Daten zum Identifizieren von Reifen können während des Betriebs des Fahrzeugs verwendet werden, so daß eine erneute Durchführung des erfindungsgemäßen Verfahrens zum Identifizieren von Reifen nicht erforderlich ist.

Da nicht gewährleistet werden kann, daß zwischen einer Beendigung und einer Wiederaufnahme des Fahrzeugbetriebs kein Reifenwechsel durchgeführt wurde, ist es zu bevorzugen, daß das Verfahren bei jedem Neustart des Fahrzeugs durchgeführt wird.

Um eine eindeutige Identifikation von Reifen auch während des Fahrbetriebs des Fahrzeugs in jeder Situation (z.B. bei einer Fehlfunktion elektrischer/elektronischer Fahrzeugkomponenten) zu gewährleisten, ist es zu bevorzugen, daß das erfindungsgemäße Verfahren während eines Fahrbetriebs des Fahrzeugs zu vorbestimmten Zeitpunkten oder in vorbestimmten Zeitintervallen wiederholt, d.h. erneut durchgeführt wird.

Die Aufgabe der Erfindung wird auch mit einem System zur Identifizierung eines Reifens eines Fahrzeugs gelöst. Hierfür umfaßt das System eine Einrichtung, die zur Erfassung von Reifendrücken an einem Reifen eines Fahrzeugs angeordnet ist, und eine Sendeeinrichtung, die mit der Einrichtung zur Erfassung der Reifendrücke verbunden ist, um Reifendrucksignale zu übertragen. Diese Reifendrucksignale der Sendeeinrichtung werden von einer Empfängereinrichtung empfangen und an eine Prozessoreinrichtung übertragen, die zur Verarbeitung der Reifendrucksignale mit der Empfangseinrichtung verbunden ist. Ferner weist das erfindungsgemäße System wenigstens eine Einrichtung zur Erfassung von Fahrzustandsparametern auf, die fahrdynamische Zustände des Fahrzeugs charakterisieren. Die wenigstens eine Einrichtung zur Erfassung der Fahrzustandsparameter ist zur Übertragung derselben mit der Prozessoreinheit verbunden. Erfindungsgemäß ist die Prozessoreinrichtung so ausgelegt, daß sie aus den Reifendrucksignalen Reifendruckänderungen für den Reifen ermittelt und unter Verwendung der Fahrzustandsparameter auswertet, um Daten/Informationen bereitzustellen, die zur Identifizierung des Reifens dienen, an dem die Einrichtung zum Erfassen des Reifendrucks angeordnet ist.

Vorzugsweise sind an wenigstens zwei Reifen, die jeweils einem Rad des Fahrzeugs zugeordnet sind, jeweils eine Einrichtung zur Erfassung der entsprechenden Reifendrücke angeordnet, wobei jede der Einrichtungen zur Erfassung der Reifendrücke mit einer entsprechenden Sendeeinrichtung verbunden und die Empfängereinrichtung zum Empfang von Drucksignalen aller Sendeeinrichtungen eingerichtet ist.

Ferner sollte die Prozessoreinrichtung so ausgelegt sein, daß sie Reifendruckänderungen für jeden Reifen, an dem eine der Einrichtungen zum Erfassen von Reifendrücken angeordnet ist, ermittelt und unter Verwendung der Fahrzustandsparameter auswertet. Auf diese Weise ist es möglich, Reifendruckänderungen den entsprechenden Reifen zuzuordnen, so daß jeder Reifen identifiziert wird.

Vorzugsweise umfaßt die Einrichtung zum Erfassen von Reifendruckänderungen einen Drucksensor.

Ferner sollte die wenigstens eine Einrichtung zur Erfassung der Fahrzustandsparameter wenigstens einen Sensor zur Messung fahrdynamischer Zustandsgrößen umfassen.

Ferner kann die Einrichtung zur Erfassung von Reifendrücken oder die Sendeeinrichtung eine charakteristische Kennung aufweisen, die von der Sendeeinrichtung vor, nach oder zeitgleich mit den Reifendrucksignalen zu der Empfangseinrichtung übertragen wird.

Um das erfindungsgemäße System bei Fahrzeugen mit einer unterschiedlichen Anzahl von Reifen und/oder einer unterschiedlichen Anzahl von Einrichtungen zur Erfassung von Reifendruckänderungen bzw. entsprechenden Sendeeinrichtungen zu verwenden, weist die Empfängereinrichtung Empfangseinheiten auf, die jeweils einer Sendeeinrichtung zum Empfang von Signalen von derselben zugeordnet ist. Dies erlaubt einen modularen Aufbau des erfindungsgemäßen Systems, der auf den jeweiligen Anwendungsfall (z.B. Fahrzeugtyp) angepaßt werden kann.

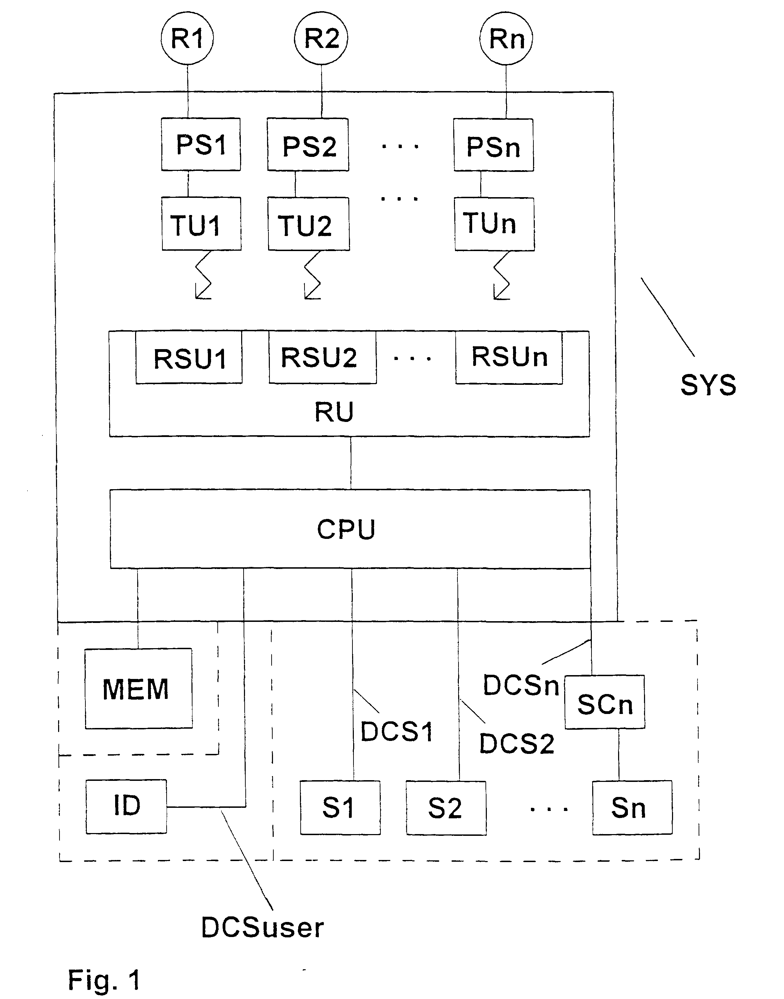

Im folgenden werden unter Bezugnahme auf die beigefügte Figur 1 bevorzugte Ausführungsformen der Erfindung beschrieben.

### Kurzbeschreibung der Figur

Fig. 1 zeigt eine schematische Darstellung einer Ausführungsform der Erfindung.

### Beschreibung bevorzugter Ausführungsformen der Erfindung

Wie in Fig. 1 gezeigt, umfaßt das System SYS zur Identifizierung eines Reifen R1, ..., Rn eines Fahrzeugs Drucksensoren PS1, ...,PSn, die jeweils zum Erfassen des entsprechenden Reifendrucks einem der Reifen R1..., Rn des Fahrzeugs zugeordnet sind. Jeder Drucksensor PS1..., PSn ist mit einer Sendeeinrichtung TU1,..., TUn verbunden, um Signale, die den jeweiligen erfaßten Reifendruck angeben an die Sendeeinrichtungen TU1, ..., TUn zu übertragen.

Die Reifendrucksignale von den Drucksensoren PS1,..., PSn können je nach Sensortyp analoge oder digitale Signale sein. Die Sendeeinrichtung TU1, ..., TUn übertragen die empfangenen Reifendrucksignale oder entsprechende Signale an eine Empfängereinrichtung RU. Die Übertragung der Reifendrucksignale von den einzelnen Sendeeinrichtungen TU1, ..., TUn zu der Empfängereinrichtung erfolgt drahtlos, wobei es erforderlich sein kann, daß die Sendeeinrichtungen TU1, ..., TUn die empfangenen Reifendrucksignale vor ihrer Übertragung so umwandeln, daß sie für eine drahtlose Übertragung geeignet sind. Dies ist beispielsweise der Fall, wenn die Drucksensoren PS1, ..., PSn analoge Signale ausgeben und die Sendeeinrichtungen TU1, ..., TUn Signale in digitaler Form zur Übertragung zu der Empfängereinrichtung RU benötigen.

In Fig. 1 sind die Drucksensoren PS1, ..., PSn und die entsprechenden Sendeeinrichtungen TU1, ..., TUn als getrennte Komponenten des Systems SYS dargestellt. Es ist aber auch möglich, die Drucksensoren und die entsprechenden Sendeeinrichtungen baueinheitlich anzuordnen, um eine kleinere Bauform zu erreichen und die Übertragung von Reifendrucksignalen von den Drucksensoren zu den Sendeeinrichtungen zu vereinfachen. Insbesondere ist es von Vorteil, die Drucksensoren sowie die entsprechenden Sendeeinrichtungen integriert auszuführen, wenn die Drucksensoren in den entsprechenden Reifen R1, ..., Rn bzw. zugehörige Felge oder Ventil integriert werden sollen.

Die Übertragung der Reifendrucksignale von den Sendeeinrichtungen TU1, ..., TUn zu der Empfängereinrichtung RU erfolgt drahtlos, d.h. ohne eine physikalische Verbindung zwischen den Sendeeinrichtungen TU1, ..., TUn und der Empfängereinrichtung RU. Die Übertragung der Reifendrucksignale kann auf jede bekannte Weise erfolgen, z.B. unter Verwendung von Hochfrequenzsignalen, optischen Signalen oder anderen elektromagnetischen Signalen.

Bei der dargestellten Ausführungsform umfaßt die Empfängereinrichtung RU Empfangseinheiten RSU1, ..., RSUn, die jeweils einer der Sendeeinrichtungen TU1, ..., TUn zugeordnet sind.

Die Verwendung der Empfangseinheiten RSU1, ..., RSUn ermöglicht es, die von den Sendeeinrichtungen TU1, ..., TUn übertragenen Reifendrucksignale zeitgleich und/oder unabhängig voneinander zu empfangen.

Alternativ ist es möglich, eine Empfängereinrichtung RU zu verwenden, die nur einen Empfänger für alle Sendeeinrichtungen TU1, ..., TUn oder Empfängereinheiten RSU1, ..., RSUn umfaßt, die mehreren Sendeeinrichtungen TU1, ..., TUn zugeordnet sind. In diesen Fällen ist es notwendig, entsprechende Signalübertragungsverfahren (z.B. Zeitmultiplexverfahren, Frequenzmultiplexverfahren) zu verwenden, um eine fehlerfreie Signalübertragung sowie einen fehlerfreien Signalempfang zu gewährleisten.

Wie in Fig. 1 gezeigt, sind die Empfängereinheiten RSU1, ..., RSUn in die Empfangseinrichtung RU integriert. Alternativ ist es möglich, die Empfängereinheiten RSU1, ..., RSUn und die Empfängereinrichtung RU als getrennte Komponenten auszuführen. Auf diese Weise ist es möglich, eine Empfängereinrichtung RU für verschiedene Anwendungen (Reifenanzahl, Fahrzeugtyp ...) zu verwenden, wobei die Anzahl und Art der Empfängereinheiten RSU1, ..., RSUn auf die jeweilige Anwendung angepaßt wird. Dieser modulare Aufbau der Empfängereinrichtung RU sowie der Empfängereinheiten RSU1, ..., RSUn erfordert zwar einen höheren Aufwand, erlaubt aber einen flexibleren Einsatz des Systems SYS zur Identifizierung eines Reifens des Fahrzeugs.

Die Empfängereinrichtung RU überträgt die empfangenen Reifendrucksignale an eine Prozessoreinrichtung CPU. Auch hier kann eine Bearbeitung/Verarbeitung der empfangenen Reifendrucksignale durch die Empfängereinrichtung RU und/oder die Prozessoreinrichtung CPU durchgeführt werden, um die Reifendrükke wiedergebende Signale zu erhalten, die für eine Übertragung zu der Prozessoreinrichtung CPU und für einen Empfang von derselben geeignet sind.

Ferner ist es möglich, die Empfängereinrichtung RU und die Prozessoreinrichtung CPU in einem Bauelement zu integrieren, wenn nicht, wie in Fig. 1 zu sehen, entsprechend verbundene, getrennte Empfänger- und Prozessoreinrichtungen RU, CPU verwendet werden.

Neben den Reifendrucksignalen erhält die Prozessoreinrichtung Fahrzustandssignale DCS1, ..., DCSn, DCSᵤₛₑᵣ . Die Fahrzustandssignale DCS1, ..., DCSn, DCSᵤₛₑᵣ geben Fahrzustandsparameter wieder, die von fahrdynamischen Zuständen des Fahrzeugs bestimmt werden bzw. fahrdynamische Zustände des Fahrzeugs beschreiben.

Die Fahrzustandssignale DCS1, ..., DCSn, DCSᵤₛₑᵣ können auf verschiedene Weise der Prozessoreinrichtung CPU zugeführt werden. Im einfachsten Fall ist die Prozessoreinrichtung CPU unmittelbar mit einem Sensor S1 verbunden, der in dem Fahrzeug so angeordnet ist, daß er Fahrzustandsparameter des Fahrzeugs erfaßt und der Prozessoreinrichtung CPU bereitstellt. Alternativ oder ergänzend ist es möglich, daß die Prozessoreinrichtung CPU mit einem Sensorcontroller SCn verbunden ist, der einen entsprechenden zugeordneten Sensor Sn steuert, um Fahrzustandsparameter zu erfassen, gegebenenfalls die Fahrzustandsparameter wiedergebende Signale bearbeitet/verarbeitet und der Prozessoreinrichtung CPU zur Verfügung stellt.

In beiden Fällen können die Sensoren S1, ..., Sn spezielle der Prozessoreinrichtung CPU zugeordnete Sensoren und/oder Sensoren sein, die von anderen Fahrzustandsparameter verwendenden Systemen (z.B. ABS, ESP, ASR, aktive Fahrwerksdämpfung, elektronische Fahrzeugstabilitätssysteme) über geeignete Verbindungen (z. B. CAN-Bus) empfangen werden.

Welche Sensortypen für die Sensoren S1, ..., Sn verwendet werden, hängt in erster Linie von der jeweiligen Anwendung (Fahrzeugtyp, bereits vorhandene Fahrzeugkomponenten) ab, solange die von den Sensoren S1, ..., Sn bereitgestellten Fahrzustandssignale DCS1, ..., DCSn fahrdynamische Zustände des Fahrzeugs so wiedergeben werden, daß eine Identifizierung eines Reifens R1, ..., Rn des Fahrzeugs unter Verwendung dieser Signale von der Prozessoreinrichtung CPU durchgeführt werden kann. Beispiele für mögliche Sensortypen sind Sensoren zur Erfassung der Beschleunigung des Fahrzeugs, der Bremsbetätigung, der Gaspedalstellung, der Motordrehzahl, des Motordrehmoments, der Lenkradstellung, der Reifen/Räderdrehzahl usw.

Ferner ist es möglich, der Prozessoreinrichtung CPU Fahrzustandssignale DCSᵤₛₑᵣ bereitzustellen, die unabhängig von den Sensoren S1, ..., Sn unter Steuerung eines Benutzers (z.B. des Fahrers) unter Verwendung einer entsprechenden Eingabevorrichtung ID erzeugt werden. Die Verwendung der Fahrzustandssignale DCSᵤₛₑᵣ ermöglicht es, das System SYS zur Identifizierung eines Reifens des Fahrzeugs auch in solchen Fahrzeugen einzusetzen, bei denen die Verwendung von Sensoren zur Erfassung fahrdynamischer Zustände nicht möglich oder zu kostenaufwendig ist. Dies ist beispielsweise der Fall, wenn ein Fahrzeug mit dem System SYS nachträglich ausgerüstet werden soll und in dem Fahrzeug (noch) keine Sensoren zur Erfassung fahrdynamischer Zustände vorhanden oder vorgesehen sind.

Wie in Fig. 1 durch die gestrichelten Linien angedeutet, kann das System SYS die Sensoren S1, ..., Sn, entsprechende Sensorcontroller SCn und/oder die Eingabevorrichtung ID umfassen und/oder lediglich Fahrzustandssignale DCS1, ..., DCSn, DCSᵤₛₑᵣ dieser Einheiten empfangen.

Ergänzend kann das System SYS zur Identifizierung eines Reifens mit einer Speichereinrichtung MEM verbunden sein oder dieselbe umfassen. Die Speichereinrichtung MEM enthält Daten, auf die die Prozessoreinrichtung CPU zugreifen kann und die zumindest teilweise von der Prozessoreinrichtung CPU in der Speichereinrichtung MEM abgelegt werden. Diese Daten umfassen sowohl Daten, die zur Identifizierung eines Reifens von der Prozessoreinrichtung CPU verwendet/benötigt werden, sowie Daten, die - nach der Identifizierung des (der) Reifen(s) R1, ..., Rn - den (die) Reifen identifizieren.

Im folgenden wird der Betrieb des Systems SYS zur Identifizierung von Reifen am Beispiel eines Personenkraftwagens mit vier, an den Fahrzeugachsen angebrachten Rädern sowie einem Reserverad beschrieben, wobei jedes Rad jeweils einen Reifen umfaßt. Diese Beschreibung beschränkt die Erfindung nicht auf deren Verwendung bei derartigen Fahrzeugtypen, da die Erfindung bei jedem Fahrzeugtyp verwendet werden kann, der Reifen umfaßt, die Reifendruckänderungen unterworfen sind. Hierzu zählen Motorräder, Fahrzeuge mit mehr als vier Reifen bzw. Rädern und Fahrzeuge mit mehr als seinem Reifen pro Rad (Zwillingsreifen).

Mit Hilfe der Drucksensoren PS1, ..., PS5 werden für einen ersten fahrdynamischen Zustand des Fahrzeugs die Reifendrücke der Reifen R1, ..., R5 erfaßt und von den Sendeeinrichtungen TU1, ..., TU5 an die Empfängereinrichtung RU übertragen. Die Prozessoreinrichtung CPU empfängt neben den Reifendrucksignalen von der Empfängereinrichtung RU die Fahrzustandssignale DCS1, ..., DCSn, DCSᵤₛₑᵣ, die den ersten fahrdynamischen Zustand des Fahrzeugs bei dem die Reifendrücke erfaßt wurden, angeben.

Obwohl es möglich ist jeden fahrdynamischen Zustand des Fahrzeugs als ersten fahrdynamischen Zustand zu definieren, sollte ein vorgegebener fahrdynamischer Zustand verwendet werden, um das Identifizieren der Reifen R1, ..., R5 zu vereinfachen. Als vorgegebener erster fahrdynamischer Zustand des Fahrzeugs kann beispielsweise der fahrdynamische Zustand definiert werden, in dem sich das Fahrzeug mit konstanter Geschwindigkeit in Geradeausfahrt oder in einer Parkposition (d.h. Zündung eingeschaltet/Motor gestartet, keine Geschwindigkeit) befindet.

Ausgehend von einem ersten fahrdynamischen Zustand des Fahrzeugs, in dem sich das Fahrzeug mit konstanter Geschwindigkeit in Geradeausfahrt befindet, werden der Prozessoreinrichtung CPU folgende als beispielhaft zu verstehende Informationen bereitgestellt:
Erster fahrdynamischer Zustand: Geradeausfahrt, Geschwindigkeit konstant
Druck des Reifens R1: 1,800 bar
Druck des Reifens R2: 1,900 bar
Druck des Reifens R3: 2,000 bar
Druck des Reifens R4: 1,930 bar
Druck des Reifens R5: 1,880 bar

Danach werden für einen zweiten fahrdynamischen Zustand des Fahrzeugs die Drücke der Reifen R1, ..., R5 erfaßt und der Prozessoreinrichtung CPU bereitgestellt. Auch hier empfängt die Prozessoreinrichtung CPU Fahrzustandssignale DCS1, ..., DCSn, DCSᵤₛₑᵣ, die den zweiten fahrdynamischen Zustand angeben. Wie im Falle des ersten fahrdynamischen Zustands, kann auch für den zweiten fahrdynamischen Zustand jeder beliebige oder ein vorbestimmter fahrdynamischer Zustand des Fahrzeugs definiert werden.

Wird ein vorbestimmter fahrdynamischer Zustand verwendet, kann die Erfassung der entsprechenden Reifendrücke erst dann stattfinden, wenn das Fahrzeug den vorbestimmten zweiten fahrdynamischen Zustand eingenommen hat. Je nach Definition des vorbestimmten zweiten fahrdynamischen Zustands kann dies das Identifizieren der Reifen R1, ..., R5 erschweren oder unmöglich machen, nämlich dann, wenn das Fahrzeug den vorbestimmten zweiten fahrdynamischen Zustand nicht oder nur selten einnimmt.

Daher sollte im Falle eines vorbestimmten zweiten fahrdynamischen Zustands ein fahrdynamischer Zustand gewählt werden, der von dem Fahrzeug häufig angenommen wird. Beispielsweise kann als vorbestimmter zweiter fahrdynamischer Zustand des Fahrzeugs der fahrdynamische Zustand definiert werden, in dem das Fahrzeug aus dem Stillstand zum Anfahren beschleunigt wird (z.B. beim Anfahren an einer Ampel).

Um das Identifizieren der Reifen R1, ..., R5 des Fahrzeugs möglichst schnell (z.B. unmittelbar nach der Inbetriebnahme des Fahrzeugs) durchzuführen, werden die Reifendrücke für den zweiten fahrdynamischen Zustand des Fahrzeugs nicht für einen vorbestimmten fahrdynamischen Zustand sondern in einem vorbestimmten zeitlichen Abstand zu der Erfassung der Reifendrücke für den ersten fahrdynamischen Zustand ermittelt. Die Wahl des vorbestimmten zeitlichen Abstands wird von der jeweiligen Anwendung der Erfindung bestimmt.

Zu dem Zeitpunkt, an dem die Reifendrücke für einen zweiten fahrdynamischen Zustand erfaßt werden, werden die Fahrzustandsparameter ermittelt, die den entsprechenden zweiten fahrdynamischen Zustand wiedergeben. Beispielsweise kann der zweite fahrdynamische Zustand des Fahrzeugs der Zustand sein, in dem sich das Fahrzeug mit konstanter Geschwindigkeit in einer Linkskurve befindet. In diesem Fall stehen der Prozessoreinrichtung CPU folgende Informationen zur Verfügung:
Zweiter fahrdynamischer Zustand: Kurvenfahrt links, konstante Geschwindigkeit
Druck des Reifens R1: 1,760 bar
Druck des Reifens R2: 1,860 bar
Druck des Reifens R3: 2,000 bar
Druck des Reifens R4: 1,970 bar
Druck des Reifens R5: 1,920 bar

Aus diesen Informationen ergibt sich, daß sich die Drücke der Reifen R1 und R2 verringern und die Drücke der Reifen R4 und R5 erhöht haben, wobei der Druck des Reifens R3 konstant geblieben ist.

Somit sind die Reifen R1 und R2 an der kurveninneren Seite des Fahrzeugs (linke Fahrzeugseite) und die Reifen R4 und R5 an der kurvenäußeren Seite des Fahrzeugs (rechte Fahrzeugseite) angeordnet. Da der Reifen R3 keiner Druckänderung unterworfen ist, ist der Reifen R3 der Ersatzreifen.

Um die Vorder- und Hinterreifen des Fahrzeugs zu identifizieren, ist es erforderlich, die Drücke der Reifen R1, ..., R5 für einen dritten fahrdynamischen Zustand des Fahrzeugs zu ermitteln. Wie im Falle des zweiten fahrdynamischen Zustandes ist es möglich, die Reifendrücke für einen vorbestimmten dritten fahrdynamischen Zustand oder für einen beliebigen fahrdynamischen Zustand in einem vorbestimmten zeitlichen Abstand zu der vorherigen Reifendruckerfassung durchzuführen. Hierbei kann der vorbestimmte zeitliche Abstand dem zeitlichen Abstand zwischen der ersten und der zweiten Druckerfassung entsprechen oder sich von demselben unterscheiden.

Aus den oben genannten Gründen wird die dritte Reifendruckerfassung vorzugsweise für einen beliebigen fahrdynamischen Zustand in einem zeitlichen Abstand zu der zweiten Reifendrukkerfassung durchgeführt, wobei sich - der Einfachheit halber - die zeitlichen Abstände entsprechen. Befindet sich das Fahrzeug bei der dritten Reifendruckerfassung in einer Geradeausfahrt mit konstanter positiver Beschleunigung, werden der Prozessoreinrichtung CPU folgende Informationen bereitgestellt:
Dritter fahrdynamischer Zustand: Geradeausfahrt, konstante positive Beschleunigung
Druck des Reifens R1: 1,690 bar
Druck des Reifens R2: 1,980 bar
Druck des Reifens R3: 2,000 bar
Druck des Reifens R4: 1,850 bar
Druck des Reifens R5: 1,920 bar

Da - im Vergleich zu den Reifendrücken im ersten fahrdynamischen Zustand - die Reifen R1 und R4 eine Verringerung des Reifendrucks und die Reifen R2 und R5 eine Erhöhung des Reifendrucks aufweisen, ergibt sich, daß der Reifen R1 der linke Vorderreifen, der Reifen R2 der linke Hinterreifen, der Reifen R4 der rechte Vorderreifen und der Reifen R5 der rechte Hinterreifen ist.

Diese dritte Reifendruckerfassung für den dritten fahrdynamischen Zustand ist nicht erforderlich, wenn eine eindeutige Identifizierung der Reifen R1, ..., R5 aufgrund der Informationen über den zweiten fahrdynamischen Zustand möglich ist. Dies ist beispielsweise der Fall, wenn anstelle des obengenannten zweiten fahrdynamischen Zustands ein fahrdynamischer Zustand vorliegt, bei dem sich das Fahrzeug mit konstanter Beschleunigung in einer Linkskurve befindet.

Unabhängig davon ist es möglich, Reifendrücke sowie entsprechende Fahrzustandsparameter für weitere fahrdynamische Zustände zu erfassen, um eine zuverlässigere Identifizierung der Reifen R1, ..., R5 zu gewährleisten oder eine bereits erfolgte Identifizierung der Reifen zu überprüfen.

Nach erfolgter Identifizierung der Reifen R1, ..., R5 erzeugt die Prozessoreinrichtung CPU Daten/Informationen, die die Identifizierung wiedergeben und überträgt diese an die Speichereinrichtung MEM. Auf diese Daten in der Speichereinrichtung MEM wird dann von der Prozessoreinrichtung CPU und/oder anderen Einrichtungen des Fahrzeugs (nicht gezeigt) zugegriffen, um erfaßte Reifendruckänderungen (z.B. Druckverlust aufgrund eines Reifendefekts) den entsprechenden Reifen R1, ..., R5 zuzuordnen.

Des weiteren kann die Speichereinrichtung MEM Daten/Informationen enthalten, die von der Prozessoreinrichtung CPU bei der Reifenidentifizierung und insbesondere der Analyse der erfaßten Reifendruckänderungen unter Verwendung der Fahrzustandsparameter verwendet werden. Derartige Daten/Informationen umfassen zuvor erfaßte Reifendrücke bzw. Reifendruckänderungen, Algorithmen zur Reifenidentifizierung bzw. zur Analyse von Reifendrücken bzw. Reifendruckänderungen, Nachschlagetabellen und Daten/Informationen, die zur Anwendung von neuronalen Netzwerken und/oder chaostheoretischer Verfahren dienen.

Bei Fahrzeugen, die mit dem System SYS zur Identifizierung von Reifen nachgerüstet werden sollen und die keine Sensoren zur Erfassung fahrdynamischer Zustände aufweisen, kann die Nachrüstung mit entsprechenden Fahrzustandssensoren zu aufwendig oder unmöglich sein. In diesem Fall ist es notwendig, der Prozessoreinrichtung CPU Daten/Informationen, die Fahrzustände des Fahrzeugs angeben, auf andere Weise bereitzustellen.

Eine mögliche Lösung hierfür ist die Verwendung einer Eingabevorrichtung ID, die vorzugsweise im Fahrzeuginneren, genauer in der Fahrgastzelle angeordnet ist. Unter Steuerung der Prozessoreinrichtung CPU werden mittels der Eingabevorrichtung ID von einem Benutzer (z.B. dem Fahrer) einzunehmende fahrdynamische Zustände vorgegeben. Sobald das Fahrzeug unter Steuerung des Benutzers einen vorgegebenen fahrdynamischen Zustand eingenommen hat, wird dies von dem Benutzer unter Verwendung der Eingabevorrichtung ID bestätigt. Die Eingabevorrichtung ID überträgt entsprechende Fahrzustandssignale DCSᵤₛₑᵣ an die Prozessoreinrichtung CPU, die unter Verwendung dieser Fahrzustandssignale DCSᵤₛₑᵣ entsprechende Reifendrücke zum Identifizieren der Reifen R1, ..., R5 analysiert.

Die Eingabevorrichtung ID kann auch bei Fahrzeugen verwendet werden, die das System SYS in Verbindung mit entsprechenden Sensoren S1, ..., Sn aufweisen. In diesem Fall wird die Eingabevorrichtung ID als Diagnosevorrichtung zur Überprüfung des Systems SYS verwendet. Hierbei ist es möglich, die Eingabevorrichtung ID als in dem Fahrzeug angeordnete Einrichtung oder als tragbare mit dem System SYS zu verbindende Diagnosevorrichtung auszuführen.

Wird nach der Beendigung eines Betriebs des Fahrzeugs und vor einer erneuten Inbetriebnahme des Fahrzeugs ein Reifenwechsel vorgenommen, können die Daten/Informationen der Speichereinrichtung MEM zur Identifizierung von Reifen ihre Gültigkeit verlieren. Damit während eines Betriebs des Fahrzeugs immer gültige Daten/Informationen zur Identifizierung der Reifen zur Verfügung stehen, wird die Identifizierung der Reifen nach jeder erneuten Inbetriebnahme des Fahrzeugs wiederholt.

## Patentansprüche

1. Verfahren zum Identifizieren eines Reifens eines Fahrzeugs, mit folgenden Schritten:
- Erfassen des Reifendrucks von wenigstens einem Fahrzeugreifen bei wenigstens zwei unterschiedlichen fahrdynamischen Zuständen eines Fahrzeugs,
- Vergleichen der Reifendrücke, um eine Reifendruckänderung zu ermitteln, und
- Analysieren der Reifendruckänderung unter Verwendung von Fahrzustandsparametern, die die wenigstens zwei unterschiedlichen fahrdynamischen Zustände charakterisieren, zum Identifizieren desjenigen Reifens des Fahrzeugs, an dem die Reifendrücke erfaßt wurden.

2. Verfahren nach Anspruch 1,
**dadurch gekennzeichnet, daß**
- das Erfassen und Vergleichen der Reifendrücke für wenigstens einen Reifen von wenigstens zwei unterschiedlichen Rädern des Fahrzeugs durchgeführt wird.

3. Verfahren nach Anspruch 1 oder 2,
**dadurch gekennzeichnet, daß**
- das Erfassen und Vergleichen der Reifendrücke für alle Reifen durchgeführt wird, an denen Reifendrücke ermittelt werden, und
- das Analysieren der Reifendruckänderungen unter Verwendung von Informationen durchgeführt wird, die zuvor erfasste Reifendrücke oder Reifendruckänderungen, Nachschlagetabellen und Informationen umfassen, die zur Anwendung neuronaler Netzwerke oder chaostheoretischer Verfahren dienen.

4. Verfahren nach einem der Ansprüche 1 bis 3,
**dadurch gekennzeichnet, daß**
- das Erfassen der Reifendrücke wenigstens ein Erfassen der Reifendrücke bei einem vorbestimmten fahrdynamischen Zustand des Fahrzeugs umfaßt.

5. Verfahren nach einem der Ansprüche 1 bis 4,
**gekennzeichnet durch**
- Erfassen der Fahrzustandsparameter, die die fahrdynamischen Zustände des Fahrzeugs charakterisieren.

6. Verfahren nach einem der Ansprüche 1 bis 5,
**gekennzeichnet durch**
- Ermitteln der fahrdynamischen Zustände des Fahrzeugs aus den Fahrzustandsparametern.

7. Verfahren nach einem der Ansprüche 1 bis 6,
**gekennzeichnet durch**
- Speichern von Daten zur Identifizierung der Reifen.

8. Verfahren nach einem der Ansprüche 1 bis 7,
**dadurch gekennzeichnet, daß**
- das Verfahren bei jedem Neustart des Fahrzeugs durchgeführt wird.

9. Verfahren nach einem der Ansprüche 1 bis 8,
**dadurch gekennzeichnet, daß**
- das Verfahren während eines Fahrbetriebs des Fahrzeugs zu vorbestimmten Zeitpunkten oder in vorbestimmten Zeitintervallen durchgeführt wird.

10. System zur Identifizierung eines Reifens eines Fahrzeugs zur Durchführung des Verfahrens gemäß Anspruch 1, mit:
- einer Einrichtung (PS1, ..., PSn), die zur Erfassung des Reifendrucks von wenigstens einem Reifen (R1,..., Rn) bei wenigstens zwei unterschiedlichen fahrdynamischen Zuständen eines Fahrzeugs angeordnet ist,
- einer Sendeeinrichtung (TU1, ..., TUn), die mit der Einrichtung (PS1, ..., PSn) zur Erfassung des Reifendrucks verbunden ist, um Reifendrucksignale zu übertragen,
- einer Empfängereinrichtung (RU) zum Empfang der von der Sendeeinrichtung (TU1, ..., TUn) übertragenen Reifendrucksignale,
- einer Prozessoreinrichtung (CPU), die zum Empfang der Reifendrucksignale mit der Empfängereinrichtung (RU) verbunden ist, und
- wenigstens einer Einrichtung (S1, ..., Sn) zur Erfassung von Fahrzustandsparametern, die die wenigstens zwei unterschiedlichen fahrdynamischen Zustände des Fahrzeugs charakterisieren, wobei die wenigstens eine Einrichtung (S1, ..., Sn) zur Erfassung der Fahrzustandsparameter zur Übertragung der Fahrzustandsparameter mit der Prozessoreinrichtung (CPU) verbunden ist,
**dadurch gekennzeichnet, daß**
- die Prozessoreinrichtung (CPU) eingerichtet ist, aus den Reifendrucksignalen eine Reifendruckänderung für den Reifen (R1, ..., Rn) zu ermitteln und unter Verwendung der Fahrzustandsparameter zu analysieren, um den Reifen zu identifizieren, an dem die Einrichtung (PS1, ..., PSn) zum Erfassen des Reifendrucks angeordnet ist :

11. System nach Anspruch 10,
**dadurch gekennzeichnet, daß**
- an wenigstens zwei Reifen (R1, ..., Rn), die jeweils einem Rad des Fahrzeugs zugeordnet sind, jeweils eine Einrichtung (PS1, ..., PSn) zur Erfassung entsprechender Reifendrücke angeordnet sind, und
- jede der Einrichtungen (PS1, ..., PSn) zur Erfassung der Reifendrücke mit einer Sendeeinrichtung (TU1, ..., TUn) verbunden ist, wobei die Empfängereinrichtung (RU) zum Empfang von Reifendrucksignalen aller Sendeeinrichtungen (TU1, ..., TUn) eingerichtet ist.

12. System nach einem der Ansprüche 10 oder 11,
**dadurch gekennzeichnet, daß**
- die Prozessoreinrichtung (CPU) eingerichtet ist, Reifendruckänderungen für jeden Reifen (R1, ..., Rn), an dem eine der Einrichtungen (PS1, ..., PSn) zum Erfassen von Reifendrücken angeordnet ist, zu ermitteln und unter Verwendung der Fahrzustandsparameter auszuwerten, um die Reifendruckänderungen dem jeweiligen Reifen (R1, ..., Rn) zuzuordnen, so daß jeder Reifen (R1, ..., Rn) identifiziert wird.

13. System nach einem der Ansprüche 10 bis 12,
**dadurch gekennzeichnet, daß**
- die Einrichtung (PS1, ..., PSn) zum Erfassen von Reifendrücken wenigstens einen Drucksensor umfaßt.

14. System nach einem der Ansprüche 10 bis 13,
**dadurch gekennzeichnet, daß**
- die wenigstens eine Einrichtung (S1, ..., Sn) zur Erfassung der Fahrzustandsparameter wenigstens einen Sensor zur Messung fahrdynamischer Zustandsgrößen umfaßt.

15. System nach einem der Ansprüche 10 bis 14,
**dadurch gekennzeichnet, daß**
- die Einrichtung (PS1, ..., PSn) zur Erfassung von Reifendrücken oder die Sendeeinrichtung (TU1, ..., TUn) eine charakteristische Kennung aufweist, die von der Sendeeinrichtung (TU1, ..., TUn) vor, nach oder zeitgleich mit den Reifendrucksignalen zu der Empfängereinrichtung (RU) übertragen wird.

16. System nach einem der Ansprüche 12 bis 15,
**dadurch gekennzeichnet, daß**
- die Empfängereinrichtung (RU) Empfangseinheiten (RSU1, ..., RUSn) aufweist, die zum Empfang von entsprechenden Reifendrucksignalen jeweils einer oder mehreren der Sendeeinrichtungen (TU1, ..., TUn) zugeordnet sind.

## Claims

1. A method for identifying a tyre of a vehicle, with the following steps:
- measurement of the tyre pressure of at least one vehicle tyre during at least two different driving-dynamic states of a vehicle,
- comparison of the tyre pressures, for the purpose of determining a tyre pressure variation, and
- analysis of the tyre pressure variation using driving state parameters characterizing the at least two different driving-dynamic states, for the purpose of identifying the vehicle tyre at which the tyre pressures were measured.

2. The method according to Claim 1,
**characterized in that**
- the measurement and comparison of the tyre pressures are performed for at least one tyre of at least two different wheels of the vehicle.

3. The method according to Claim 1 or 2,
**characterized in that**
- the measurement and comparison of the tyre pressures are performed for all tyres at which tyre pressures are determined, and
- the analysis of the tyre pressure variations is performed using information which comprises previously measured tyre pressures or tyre pressure variations, reference tables and information used for the application of neural networks or chaos theory methods.

4. The method according to one of Claims 1 to 3,
**characterized in that**
- the measurement of the tyre pressures comprises at least one measurement of the tyre pressures during a predetermined driving-dynamic state of the vehicle.

5. The method according to one of Claims 1 to 4,
**characterized by**
- measurement of the driving state parameters which characterize the driving-dynamic states of the vehicle.

6. The method according to one of Claims 1 to 5,
**characterized by**
- determination of the driving-dynamic states of the vehicle from the driving state parameters.

7. The method according to one of Claims 1 to 6,
**characterized by**
- storage of data for the purpose of identifying the tyres.

8. The method according to one of Claims 1 to 7,
**characterized in that**
- the method is performed upon each re-startup of the vehicle.

9. The method according to one of Claims 1 to 8,
**characterized in that**
- the method is performed during a driving operation of the vehicle at predetermined instants or at predetermined intervals of time.

10. A system for identifying a tyre of a vehicle for performing the method according to Claim 1, comprising:
- a device (PS1, ..., PSn) which is arranged for the purpose of measuring the tyre pressure of at least one tyre (R1, ..., Rn) during at least two different driving-dynamic states of a vehicle;
- a transmitting device (TU1, ..., TUn) which is connected to the device (PS1, ..., PSn) for measuring the tyre pressure, for the purpose of transmitting tyre pressure signals;
- a receiver device (RU) for receiving the tyre pressure signals transmitted by the transmitting device (TU1, ..., TUn);
- a processor device (CPU) that is connected to the receiver device (RU) for the purpose of receiving the tyre pressure signals, and
- at least one device (S1, ..., Sn) for measuring driving state parameters which characterize the driving-dynamic states of the vehicle, the at least one device (S1, ..., Sn) for measuring the driving state parameters being connected to the processor device (CPU) for the purpose of transmitting the driving state parameters,
**characterized in that**
- the processor device (CPU) is set up to determine, from the tyre pressure signals, a tyre pressure variation for the tyre (R1, ..., Rn) and to evaluate it using the driving state parameters for driving-dynamic states of the vehicle, for the purpose of identifying the tyre at which the device (PS1, ..., PSn) for measuring the tyre pressure is located.

11. The system according to Claim 10,
**characterized in that**
- a device (PS1, ..., PSn) for measuring corresponding tyre pressures is located at each of at least two tyres (R1, ..., Rn) which are each respectively assigned to a wheel of the vehicle, and
- each of the devices (PS1, ..., PSn) for measuring the tyre pressures is connected to a transmitting device (TU1, ..., TUn), the receiver device (RU) being set up to receive tyre pressure signals of all transmitting devices (TU1, ..., TUn).

12. The system according to one of Claims 10 or 11,
**characterized in that**
- the processor device (CPU) is set up to determine tyre pressure variations for each tyre (R1, ..., Rn) at which one of the devices (PS1, ..., PSn) for measuring tyre pressures is located and to evaluate them, using the driving state parameters, for the purpose of assigning the tyre pressure variations to the respective tyre (R1, ..., Rn) so that each tyre (R1, ..., Rn) is identified.

13. The system according to one of Claims 10 to 12,
**characterized in that**
- the device (PS1, ..., PSn) for measuring tyre pressures comprises at least one pressure sensor.

14. The system according to one of Claims 10 to 13,
**characterized in that**
- the at least one device (S1, ..., Sn) for measuring the driving state parameters comprises at least one sensor for measuring driving-dynamic state values.

15. The system according to one of Claims 10 to 14,
**characterized in that**
- the device (PS1, ..., PSn) for measuring tyre pressures or the transmitting device (TU1, ..., TUn) has a characteristic identification which is transmitted to the receiver device (RU) by the transmitting device (TU1, ..., TUn) before, after or isochronously with the tyre pressure signals.

16. The system according to one of Claims 12 to 15,
**characterized in that**
- the receiver device (RU) comprises receiving units (RSU1, ..., RSUn) which are respectively assigned to one or more of the transmitting devices (TU1, ..., TUn) for the purpose of receiving corresponding tyre pressure signals.

## Revendications

1. Procédé pour identifier un pneu d'un véhicule, comportant les étapes suivantes:
- saisie de la pression d'au moins un pneu de véhicule pour au moins deux états de marche dynamiques différents d'un véhicule,
- comparaison des pressions de pneu pour déterminer un changement de pression de pneu, et
- analyse du changement de pression de pneu en utilisant des paramètres d'état de marche caractérisant lesdits au moins deux états de marche dynamiques différents pour identifier le pneu du véhicule dont les pressions de pneu ont été saisies.

2. Procédé selon la revendication 1, **caractérisé en ce que**
- la saisie et la comparaison des pressions de pneu sont effectuées pour au moins un pneu d'au moins deux roues différentes du véhicule.

3. Procédé selon la revendication 1 ou 2, **caractérisé en ce que**
- la saisie et la comparaison des pressions de pneu sont effectuées pour tous les pneus pour lesquels on a déterminé des pressions de pneu, et **en ce que**
- l'analyse des changements de pression de pneu est effectuée en utilisant des informations comprenant des pressions de pneu saisies auparavant ou des changements de pression de pneu, des tableaux de référence et des informations, qui sont utilisées en application à des réseaux neuronaux ou des procédés de théorie du chaos.

4. Procédé selon l'une des revendications 1 à 3, **caractérisé en ce que**
- la saisie des pressions de pneu comprend au moins une saisie des pressions de pneu pour un état de marche dynamique prédéterminé du véhicule.

5. Procédé selon l'une des revendications 1 à 4, **caractérisé par**
- une saisie des paramètres d'état de marche caractérisant les états de marche dynamiques du véhicule.

6. Procédé selon l'une des revendications 1 à 5, **caractérisé par**
- une détermination des états de marche dynamiques du véhicule à partir des paramètres d'état de marche.

7. Procédé selon l'une des revendications 1 à 6, **caractérisé par**
- un enregistrement de données pour l'identification des pneus.

8. Procédé selon l'une des revendications 1 à 7, **caractérisé en ce que**
- le procédé est exécuté lors de chaque nouveau démarrage du véhicule.

9. Procédé selon l'une des revendications 1 à 8, **caractérisé en ce que**
- le procédé est exécuté au cours d'un état de marche du véhicule à des moments préfixés ou dans des intervalles de temps préfixés.

10. Système pour identifier un pneu d'un véhicule pour la mise en oeuvre du procédé selon la revendication 1, comprenant:
- un dispositif (PS1, ..., PSn) pour saisir la pression de pneu d'au moins un pneu (R1, ..., Rn) pour au moins deux états de marche dynamiques différents du véhicule,
- un dispositif d'émission (TU1, ..., TUn) relié au dispositif (PS1, ..., PSn) pour saisir la pression de pneu afin de transmettre des signaux de pression de pneu,
- un dispositif de réception (RU) pour recevoir les signaux de pression de pneu transmis par le dispositif d'émission (TU1, ..., TUn),
- un dispositif de traitement (CPU) relié au dispositif de réception (RU) pour recevoir les signaux de pression de pneu, et
- au moins un dispositif (S1, ..., Sn) pour saisir des paramètres d'état de marche caractérisant au moins deux états de marche dynamiques différents du véhicule, ledit au moins un dispositif (S1, ..., Sn) pour saisir des paramètres d'état de marche étant relié au dispositif de traitement (CPU) afin de transmettre les paramètres d'état de marche,
**caractérisé en ce que**
- le dispositif de traitement (CPU) est agencé pour déterminer un changement de pression du pneu (R1, ..., Rn) à partir des signaux de pression de pneu et pour analyser ce changement en utilisant les paramètres d'état de marche afin d'identifier le pneu sur lequel le dispositif (PS1, ..., PSn) pour saisir la pression de pneu est placé.

11. Système selon la revendication 10, **caractérisé en ce que**
- sur au moins deux pneus (R1, ..., Rn) associé chacun à une roue du véhicule est placé un dispositif (PS1, ..., PSn) pour saisir les pressions de pneu correspondantes , et **en ce que**
- chacun des dispositifs (PS1, ..., PSn) pour saisir les pressions de pneu est relié à un dispositif d'émission (TU1, ..., TUn), le dispositif de réception (RU) étant agencé pour recevoir des signaux de pression de pneu de tous les dispositifs d'émission (TU1, ..., TUn).

12. Système selon l'une des revendications 10 et 11, **caractérisé en ce que**
- le dispositif de traitement (CPU) est agencé pour déterminer des changements de pression de pneu pour chaque pneu (R1, ... Rn) sur lequel est placé un des dispositifs (PS1, ..., PSn) pour saisir des pressions de pneu, et pour les évaluer en utilisant les paramètres d'état de marche afin d'associer les changements de pression de pneu au pneu correspondant, de sorte que chaque pneu est identifié.

13. Système selon l'une des revendications 10 à 12, **caractérisé en ce que**
- le dispositif (PS1, ..., PSn) pour saisir les pressions de pneu comprend au moins un détecteur de pression.

14. Système selon l'une des revendications 10 à 13, **caractérisé en ce que**
- ledit au moins un dispositif (S1, ..., Sn) pour saisir les paramètres d'état de marche comprend au moins un détecteur pour mesurer des grandeurs d'état de marche dynamique.

15. Système selon l'une des revendications 10 à 14, **caractérisé en ce que**
- le dispositif (PS1, ..., PSn) pour saisir les pressions de pneu ou le dispositif d'émission (TU1, ..., TUn) comprend une identification caractéristique qui est transmise par le dispositif d'émission (TU1, ..., TUn) avant, après ou en même temps que les signaux de pression de pneu au dispositif de réception (RU).

16. Système selon l'une des revendications 12 à 15, **caractérisé en ce que**
- le dispositif de réception (RU) comporte des unités de réception (RSU1, ..., RSUn) qui sont associées à un ou plusieurs dispositifs d'émission (TU1, ..., TUn) pour la réception de signaux de pression de pneu correspondants.
